# EUROPEAN PATENT APPLICATION

(11) **EP 4 503 232 A1**
(43) Date of publication of application: **05.02.2025**
(21) Application number: 22932847.1
(22) Date of filing: 28.04.2022
(51) Int. Cl.: H01M 10/058

(54) **BATTERY PRE-LITHIATION PROCESS**

(30) Priority: 24.03.2022 CN 202210300876
(71) Applicant: China Energy Lithium Co., Ltd, Tianjin 300457 (CN)
(72) Inventor: KONG, Deyu, Tianjin 300457 (CN); HUAN, Qingna, Tianjin 300457 (CN); SUN, Zhaoyong, Tianjin 300457 (CN); CHEN, Qiang, Tianjin 300457 (CN); MU, Hanbo, Tianjin 300457 (CN)
(74) Representative: Witte, Weller & Partner Patentanwälte mbB
(86) International application number: PCT/CN2022/089791
(87) International publication number: WO 2023/178790

(57) **Abstract**

This invention provides a battery pre-lithiation process comprising the following steps: Step I: providing a lithium source half-battery, wherein the lithium source half-battery comprises a single electrode, an electrolyte, and a casing that encapsulates the single electrode and the electrolyte; an external conduit in fluid communication with the interior of the casing and a microfluidic pump for controlling the flow of a fluid in the external conduit are provided on the casing; Step II: providing a battery to be pre-lithiated and punching the battery to be pre-lithiated to form a pre-lithiation tunnel; Step III: connecting the external conduit to the pre-lithiation tunnel and turning on the microfluidic pump to realize circulation between the electrolyte of the lithium source half-battery and the electrolyte of the battery to be pre-lithiated; Step IV: connecting the electrode of the lithium source half-battery and the negative electrode of the battery to be pre-lithiated to an external power supply, and performing pre-lithiation on the battery to be pre-lithiated; Step V: after the pre-lithiation, removing the external conduit and sealing the pre-lithiation tunnel to obtain a pre-lithiated battery. The pre-lithiation process of the present invention is easy to operate and exhibits high safety and high applicability.

## Description

### Technical Field

The present invention belongs to the field of lithium battery technology, in particular relates to a battery pre-lithiation process.

### Background Art

Lithium ion batteries (LIBs) have become one of the widely used electrochemical energy storage systems due to their high energy density, high operating voltage, and no memory effect. However, because of relatively low capacity (372 mAh g⁻¹), the commonly used graphite negative electrode for lithium-ion batteries cannot fully meet the market demand for high-energy density batteries. Researchers have been searching for new negative electrode materials with advantages such as ideal potential range, higher capacity, excellent rate performance, and long cycle life. However, these materials all have the disadvantage of significant initial loss of active lithium. Therefore, the research on pre-lithiation technology has become an important researching direction.

There are currently four types of pre-lithiation processes, including: a process of adding a lithium source to the negative electrode; a process of adding a lithium source to the positive electrode; a sacrificial electrode method; and a process of adding an additional lithium source. The process of adding a lithium source to the negative electrode has strict conditions, which will inevitably increase manufacturing costs, and the negative electrode pre-embedded with lithium has high reactivity, which poses a safety issue and makes it difficult to achieve large-scale applications. After the lithium source material added to the positive electrode releases lithium ions, the remaining material will be inert or even insulating, which is adverse to increase the overall energy density of the battery. The additional lithium source added during a negative electrode homogenization process is generally the stable lithium metal powder (SLMP) produced by FMC Corporation (USA). However, this method is prone to cause a short-circuit and lithium metal powder poses significant safety hazards. The sacrificial electrode method has relatively high practicality. However, an additional step of assembling a metal foil is required during the battery assembly process. When the battery is pre-lithiated, a working voltage is applied between the metal lithium electrode and the negative electrode. When the battery is working normally, the metal lithium electrode does not participate in the battery operation. After the pre-lithiation is completed, the metal lithium electrode will not be removed, which will lead to a decrease in the energy density of the battery.

In summary, it is necessary to provide a battery pre-lithiation process that is easy to operate and exhibits high safety and high applicability.

### Summary of the Invention

In view of the shortcomings of the existing technology, the present invention provides a pre-lithiation process that is easy to operate and exhibits high safety and high applicability.

To achieve the above objectives, the present invention adopts the following technical solutions.

The present invention provides a battery pre-lithiation process, comprising the following steps:
Step I: providing a lithium source half-battery, wherein the lithium source half-battery comprises a single electrode, an electrolyte, and a casing that encapsulates the single electrode and the electrolyte; an external conduit in fluid communication with the interior of the casing and a microfluidic pump for controlling the flow of a fluid in the external conduit are provided on the casing; and the electrode active substance of the single electrode is a lithium-containing metal or a lithium-containing oxide;
Step II: providing a battery to be pre-lithiated and punching the battery to be pre-lithiated to form a pre-lithiation tunnel;
Step III: connecting the external conduit to the pre-lithiation tunnel and turning on the microfluidic pump to realize circulation between the electrolyte of the lithium source half-battery and the electrolyte of the battery to be pre-lithiated;
Step IV: connecting the electrode of the lithium source half-battery and the negative electrode of the battery to be pre-lithiated to an external power supply, and performing pre-lithiation on the battery to be pre-lithiated;
Step V: after the pre-lithiation, removing the external conduit and sealing the pre-lithiation tunnel to obtain a pre-lithiated battery.

In some embodiments, the lithium-containing oxide comprises lithium iron phosphate, lithium manganese iron phosphate, lithium titanate, lithium cobaltate, lithium manganate (LiMn₂O₄), LiMnO₂, lithium nickelate, lithium nickel manganese oxide, a nickel-cobalt-manganese ternary material, a nickel-cobalt-aluminum ternary material, and a lithium peroxide; the lithium-containing metal comprises metallic lithium and an alloy of lithium with at least one of the following elements: Ag, Al, Au, Ba, Be, Bi, B, C, Ca, Cd, Co, Cr, Cs, Fe, Ga, Ge, Hf, Hg, In, Ir, K, Mg, Mn, Mo, N, Na, Nb, Ni, Pt, Pu, Rb, Rh, S, Se, Si, Sn, Sr, Ta, Te, Ti, V, Y, Zn, Zr, Pb, Pd, Sb, and Cu.

In some embodiments, the pre-lithiation tunnel is located at the upper end and/or lower end of the battery and has a tunnel diameter of 1mm to 10 mm.

In some embodiments, the pre-lithiation process is controlled by adjusting the current between electrodes, the ambient temperature, the pre-lithiation time, and the rotation speed of the microfluidic pump.

In some embodiments, a current applied in Step IV is 1mA to 5000mA.

In some embodiments, the pre-lithiation temperature is 35°C to 65°C, preferably 45 °C.

In some embodiments, the pre-lithiation time is 1 hour to 240 hours.

In some embodiments, the rotation speed of the microfluidic pump is 1 rpm to 30 rpm.

In some embodiments, the electrolyte of the lithium source half-battery is the same as or different from (preferably, the same as) that of the battery to be pre-lithiated, each selected from an ester electrolyte or an ether electrolyte.

In some embodiments, the ester electrolyte comprises ethylene carbonate (EC), diethyl carbonate (DEC), dimethyl carbonate (DMC), methyl ethyl carbonate (EMC), or the like.

In some embodiments, the ether electrolyte comprises diphenyl ether, ethylene glycol bispropionitrile ether, ethylene glycol dimethyl ether (DME), dioxane (DOL), methyl nonafluorobutyl ether, 1,1,2,2-tetrafluoroethyl-2,2,3,3-tetrafluoropropyl ether, or the like.

In some embodiments, the negative electrode active material of the battery to be pre-lithiated comprises a carbon material (graphite, hard carbon, soft carbon, graphene, or the like), silicon, silicon monoxide, lithium titanate, a metal organic framework material, a covalent organic framework material, and a composite thereof.

In some embodiments, the casing of the lithium source half-battery is provided with two external conduits.

The pre-lithiation process of the present invention has at least the following advantages:
1. The pre-lithiation process is easy to operate.
2. The materials used in the pre-lithiation process are stable and have high safety.
3. The pre-lithiation process adopts an external lithium source, which is similar to "infusion" of the battery to be pre-lithiated, and has strong applicability.

### Description of Drawings

Fig. 1 is a schematic diagram wherein the pre-lithiation is performed by using a lithium source half-battery in the present invention;
Fig. 2 is a curve showing the charging and discharging capacity of Battery D1 in Example 1 of the present invention;
Fig. 3 is a curve showing the charging and discharging capacity of Battery D2 in Example 2 of the present invention.

### Specific Embodiments

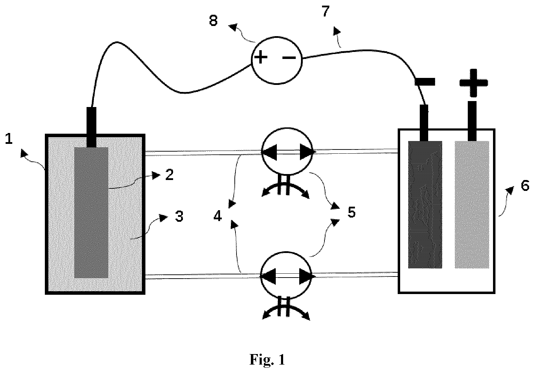

The pre-lithiation process of the present invention is shown in Fig. 1. Firstly, a lithium source half-battery is provided. The lithium source half-battery comprises a single electrode 2, an electrolyte 3, and a casing (an encapsulating material) 1 that encapsulates the single electrode and the electrolyte. An external conduit 4 in fluid communication with the interior of the casing and a microfluidic pump 5 for controlling the flow of a fluid in the external conduit are provided on the casing 1. Then, a pre-lithiation tunnel is punched at the upper end and/or the lower end of the battery to be pre-lithiated 6, and the lithium source half-battery and the battery to be pre-lithiated are connected by the external conduit. After sealing the connection port of the external conduit, the lithium source half-battery and the battery to be pre-lithiated become a connected device. The flow of electrolyte between the batteries is achieved through the control of the microfluidic pump, thereby achieving electrolyte circulation. The electrode of the lithium source half-battery and the negative electrode of the battery to be pre-lithiated are connected to an external power supply 8 through a wire 7 to pre-lithiate the battery to be pre-lithiated.

### Preparation of the lithium source half-battery

A lithium copper composite strip is used as the single electrode of the lithium source half-battery. An ordinary ester electrolyte (specifically, the lithium salt is lithium hexafluorophosphate and the solvent is ethylene carbonate) is used as the electrolyte for the lithium source half-battery. The single electrode and the electrolyte is encapsulated by using an aluminum-plastic film on which an external conduit is installed.

### Preparation of a positive electrode plate

Lithium cobaltate as a positive electrode active material, polyvinylidene fluoride (PVDF) as a binder, and a conductive carbon (SP) as a conductive agent are dissolved in N-methylpyrrolidone (NMP) in a ratio of positive electrode active material: PVDF: SP = 95:3:2 (by mass ratio) and stirred evenly to prepare a positive electrode slurry. Then, the positive electrode slurry is evenly coated on a copper foil and dried to obtain the positive electrode plate.

### Preparation of a negative electrode plate to be supplied with lithium

A conductive carbon (SP) as an electronic conductive material, a silicon carbon composite material (silicon monoxide: carbon = 55:45 (by mass ratio), wherein the first efficiency of the silicon carbon composite material is lower, about 65%) as an ionic conductive material, and carboxymethyl cellulose (CMC) as a polymer are dissolved in deionized water in proportion and stirred evenly to make a slurry, where SP: the silicon carbon composite material: CMC = 8:85:7 (by mass ratio). Then the slurry is evenly applied onto a copper foil and dried. The water content of the negative electrode membrane plate is less than 200 ppm. After hot pressing and slicing, a negative electrode plate to be supplied with lithium is prepared.

The positive electrode plate, the negative electrode plate to be supplied with lithium, and a separator coated with a ceramic layer are laminated. The lamination process should to be carried out in a drying room with a dew point of -50°C. After the lamination is completed, the cell is placed into an aluminum-plastic bag for side sealing. An electrolyte (the concentration of lithium hexafluorophosphate (LiPF₆) is 1 mol/L, and the solvent is ethylene carbonate, methyl ethyl carbonate and diethyl carbonate at a ratio of 1:1:1) is added and top sealing is performed to obtain a battery to be pre-lithiated. Six batteries are assembled with battery numbers designated as D1 to D6.

### Example 1

Battery D1 was subjected to charging and discharging test. The charging and discharging capacities of the battery were recorded and the coulombic efficiency of the battery was calculated.

### Example 2

Battery D2 was tested. Pre-lithiation tunnels were punched at the upper end and lower end of the battery, which was then connected to the lithium source half-battery. The microfluidic pump was turned on to begin the electrolyte circulation between the two batteries. At this time, the current between the lithium source half-battery and the negative electrode of the battery to be pre-lithiated was set to be 50mA, the ambient temperature was 45°C, rotation speed of the microfluidic pump was 10 rpm, and the pre-lithiation time was 60 minutes.

### Example 3

Battery D3 was tested. Pre-lithiation tunnels were punched at the upper end and lower end of the battery, which was then connected to the lithium source half-battery. The microfluidic pump was turned on to begin the electrolyte circulation between the two batteries. At this time, the current between the lithium source half-battery and the negative electrode of the battery to be pre-lithiated was set to be 50mA, the ambient temperature was 45°C, rotation speed of the microfluidic pump was 10 rpm, and the pre-lithiation time was 120 minutes.

### Example 4

Battery D4 was tested. Pre-lithiation tunnels were punched at the upper end and lower end of the battery, which was then connected to the lithium source half-battery. The microfluidic pump was turned on to begin the electrolyte circulation between the two batteries. At this time, the current between the lithium source half-battery and the negative electrode of the battery to be pre-lithiated was set to be 50mA, the ambient temperature was 45°C, rotation speed of the microfluidic pump was 20 rpm, and the pre-lithiation time was 60 minutes.

### Example 5

Battery D5 was tested. Pre-lithiation tunnels were punched at the upper end and lower end of the battery, which was then connected to the lithium source half-battery. The microfluidic pump was turned on to begin the electrolyte circulation between the two batteries. At this time, the current between the lithium source half-battery and the negative electrode of the battery to be pre-lithiated was set to be 50mA, the ambient temperature was 55°C, rotation speed of the microfluidic pump was 10 rpm, and the pre-lithiation time was 60 minutes.

### Example 6

Battery D6 was tested. Pre-lithiation tunnels were punched at the upper end and lower end of the battery, which was then connected to the lithium source half-battery. The microfluidic pump was turned on to begin the electrolyte circulation between the two batteries. At this time, the current between the lithium source half-battery and the negative electrode of the battery to be pre-lithiated was set to be 200mA, the ambient temperature was 45°C, rotation speed of the microfluidic pump was 10 rpm, and the pre-lithiation time was 10 minutes.

The pre-lithiation conditions of the batteries in respective examples were listed in Table 1, and the coulombic efficiencies of the batteries in respective examples were calculated.

**Table 1. The pre-lithiation conditions and coulombic efficiencies for respective examples**

| Batte ry No. | Current for Pre-lithiati on /mA | Ambient Temperatu re/°C | Rotation Speed of Microfluidic Pump /rpm | Pre-lithiat ion time/min | Capacity of Battery Charging/mAh | Capacity of Battery Discharging /mAh | Coulombic Efficiency /% |
|---|---|---|---|---|---|---|---|
| D1 | | | | | 291 | 188 | 64.7 |
| D2 | 50 | 45 | 10 | 60 | 290 | 235 | 81.0 |
| D3 | 50 | 45 | 10 | 120 | 288 | 288 | 100.0 |
| D4 | 50 | 45 | 20 | 60 | 292 | 240 | 82.2 |
| D5 | 50 | 55 | 10 | 60 | 289 | 238 | 82.4 |
| D6 | 200 | 45 | 10 | 30 | 290 | 287 | 99.0 |

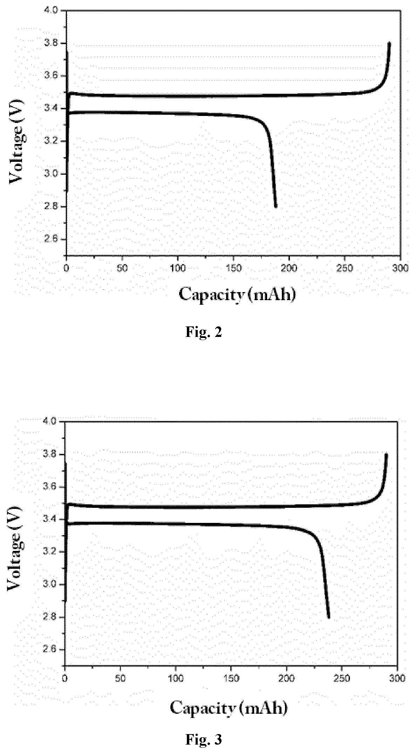

From Table 1, it can be seen that the coulombic efficiency of Battery D1 without pre-lithiation is 64.7%. The curve showing the charging and discharging capacity of Battery D1 is shown in Fig. 2. As seen from Fig. 2, there is a significant difference between the charging capacity and discharging capacity of Battery D1. This is due to the following reason: during the first discharging process, a solid electrolyte film is formed on the surface of the negative electrode, which consumes lithium ions in the positive electrode. Regarding battery D2, after the pre-lithiation, the discharging capacity of the battery is significantly improved. The curve showing the charging and discharging capacity of Battery D2 is shown in Fig. 3. From Fig. 3, it can be seen that regarding Battery D2, after the pre-lithiation, the charging capacity of the battery is 290 mAh, while the discharge capacity of the battery is 238 mAh, and the coulombic efficiency of the battery is 81%. This indicates that the pre-lithiation compensates for the lithium ions consumed by the formation of a solid electrolyte film on the negative electrode surface during the first discharge process, thereby improving the coulombic efficiency of Battery D2. The pre-lithiation process is effective. After extending the pre-lithiation time from 60 minutes to 120 minutes, the coulombic efficiency of Battery D3 is 100%. This indicates that under this pre-lithiation condition, the lithium ions consumed during the first discharge of battery D3 are fully replenished. The first charge and discharge of the battery no longer consumes the lithium ions in the positive electrode material.

As compared to the extension the pre-lithiation time, increasing the rotation speed of the microfluidic pump, and increasing the ambient temperature contribute less to the improvement of the coulomb efficiency, mainly because increasing the rotation speed of the microfluidic pump and ambient temperature facilitates the diffusion of lithium ions in the electrolyte, but the contribution to the capacity of the battery is negligible. As seen from Battery D6, by increasing the current for pre-lithiation, the pre-lithiation of the battery can be completed in a relatively short time.

It can be understood that in the examples of the present invention, although the pre-lithiation process is described in detail by combining specific positive or negative active materials, current collectors, electrolytes, separators, binders, and conductive agents, this is only a description made to meet legal requirements, and the present invention is not limited to the given examples. Technicians in this field can complete the replication of the pre-lithiation process through appropriate operations based on the disclosure and teachings in the description.

According to the disclosure and teachings in the above description, those skilled in the art of the present invention may make appropriate changes and modifications to the above examples. Therefore, the present invention is not limited to the specific examples disclosed and described above, and some modifications and changes to the present invention should also fall within the protection scope of the claims of the present invention. Furthermore, although certain specific terms are used in this description, they are only for convenience of explanation and do not constitute any limitation on the present invention.

## Claims

1. A battery pre-lithiation process, **characterized by** comprising the following steps:
Step I: providing a lithium source half-battery, wherein the lithium source half-battery comprises a single electrode, an electrolyte, and a casing that encapsulates the single electrode and the electrolyte; an external conduit in fluid communication with the interior of the casing and a microfluidic pump for controlling the flow of a fluid in the external conduit are provided on the casing; and the electrode active substance of the single electrode is a lithium-containing metal or a lithium-containing oxide;
Step II: providing a battery to be pre-lithiated and punching the battery to be pre-lithiated to form a pre-lithiation tunnel;
Step III: connecting the external conduit to the pre-lithiation tunnel and turning on the microfluidic pump to realize circulation between the electrolyte of the lithium source half-battery and the electrolyte of the battery to be pre-lithiated;
Step IV: connecting the electrode of the lithium source half-battery and the negative electrode of the battery to be pre-lithiated to an external power supply, and performing pre-lithiation on the battery to be pre-lithiated;
Step V: after the pre-lithiation, removing the external conduit and sealing the pre-lithiation tunnel to obtain a pre-lithiated battery.

2. The battery pre-lithiation process according to claim 1, **characterized in that** the lithium-containing oxide comprises lithium iron phosphate, lithium manganese iron phosphate, lithium titanate, lithium cobaltate, lithium manganate (LiMn₂O₄), LiMnO₂, lithium nickelate, lithium nickel manganese oxide, a nickel-cobalt-manganese ternary material, a nickel-cobalt-aluminum ternary material, and a lithium peroxide; the lithium-containing metal comprises metallic lithium and an alloy of lithium with at least one of the following elements: Ag, Al, Au, Ba, Be, Bi, B, C, Ca, Cd, Co, Cr, Cs, Fe, Ga, Ge, Hf, Hg, In, Ir, K, Mg, Mn, Mo, N, Na, Nb, Ni, Pt, Pu, Rb, Rh, S, Se, Si, Sn, Sr, Ta, Te, Ti, V, Y, Zn, Zr, Pb, Pd, Sb, and Cu.

3. The battery pre-lithiation process according to claim 1, **characterized in that** the pre-lithiation tunnel is located at the upper end and/or lower end of the battery and has a tunnel diameter of 1mm to 10 mm.

4. The battery pre-lithiation process according to claim 1, **characterized in that** the pre-lithiation process is controlled by adjusting the current between electrodes, the ambient temperature, the pre-lithiation time, and the rotation speed of the microfluidic pump.

5. The battery pre-lithiation process according to claim 4, **characterized in that** a current applied in Step IV is 1mA to 5000mA.

6. The battery pre-lithiation process according to claim 4, **characterized in that** the pre-lithiation temperature is 35°C to 65°C, preferably 45°C, and the pre-lithiation time is 1 hour to 240 hours.

7. The battery pre-lithiation process according to claim 4, **characterized in that** the rotation speed of the microfluidic pump is 1 rpm to 30 rpm.

8. The battery pre-lithiation process according to claim 1, **characterized in that** the electrolyte of the lithium source half-battery is the same as or different from that of the battery to be pre-lithiated, each selected from an ester electrolyte or an ether electrolyte.

9. The battery pre-lithiation process according to claim 1, **characterized in that** the negative electrode active material of the battery to be pre-lithiated comprises a carbon material, silicon, silicon monoxide, lithium titanate, a metal organic framework material, a covalent organic framework material, and a composite thereof.

10. The battery pre-lithiation process according to claim 1, **characterized in that** the casing of the lithium source half-battery is provided with two external conduits.
